# DEMANDE DE BREVET EUROPEEN

(11) **EP 0 806 639 A1**
(43) Date de publication de la demande: **12.11.1997**
(21) Numéro de dépôt: 97480012.0
(22) Date de dépôt: 19.03.1997
(51) Int. Cl.: G01H 3/00, G10K 11/34

(54) **Procédé de calibrage et procédé de commande d'un dispositif de détection d'objets par ultrasons dans l'air**

(30) Priorité: 20.03.1996 FR 9603754
(71) Demandeur: IMRA EUROPE S.A., 06560 Valbonne (FR)
(72) Inventeur: Bonnefoy, Pierre M., 06800 Cagnes-Sur-Mer (FR)
(74) Mandataire: Hammond, William

(57) **Abrégé**

L'invention concerne un procédé de commande d'un dispositif de détection d'objets par ultrasons dans l'air comportant une pluralité de transducteurs utilisés en émetteurs prévus pour fonctionner en réseau phasé et au moins un transducteur utilisé en récepteur montés sur un support, dans lequel on réalise préalablement à au moins une opération de détection une étape de calibrage pour déterminer un décalage de phase constructif de l'émetteur par rapport à un émetteur de référence, que l'on mémorise de façon à corriger ultérieurement les décalages de phase théoriques des émetteurs de la valeur du décalage de phase constructif lors des commandes de tirs ultérieurs.

## Description

L'invention concerne un procédé de commande d'un dispositif de détection et/ou de reconnaissance d'objets par ultrasons dans l'air comportant une pluralité d'émetteurs ultrasonores prévus pour fonctionner en réseau phasé et au moins un récepteur montés sur un support. L'invention concerne également un procédé de calibrage d'un tel dispositif.

Dans ces dispositifs, des transducteurs sont montés sur une face du support selon une disposition généralement régulière. Certains de ces transducteurs fonctionnent comme émetteurs, d'autres comme récepteurs. Dans la pratique, un même transducteur peut être utilisé tantôt en émetteur, tantôt en récepteur, ou bien les transducteurs émetteurs ou récepteurs peuvent être séparés.

On effectue des tirs de détection en excitant tout ou une partie des transducteurs de façon à générer un faisceau de détection formé de la sommation des faisceaux individuels de chaque transducteur émetteur. Dans le cas où un objet se trouve dans le faisceau de détection, on détecte l'écho réfléchi au moyen du ou des transducteurs récepteurs. En focalisant et en orientant successivement le faisceau dans différentes directions, on reçoit ainsi successivement un ensemble de signaux, que l'on traite électroniquement de façon à positionner et/ou caractériser l'objet.

On peut obtenir la focalisation et l'orientation en déplaçant et en orientant directement le support par des moyens mécaniques. Cependant, de préférence, le dispositif est fixé au cours des tirs successifs, et on obtient la focalisation et l'orientation du faisceau de détection en introduisant électroniquement un décalage de phase en fonction de la position relative des émetteurs, de façon que l'onde résultant de la sommation des ondes de chaque émetteur présente un pic d'amplitude dans la direction ou selon le plan voulu. La précision des tirs de détection est ainsi supérieure et les modifications d'orientation plus rapides par rapport à un balayage mécanique. Cette méthode de commande est communément appelée fonctionnement en réseau phasé.

Le décalage de phase de chaque émetteur permettant d'obtenir un front monophasé focalisé dans une direction ou selon un plan donné peut être déterminé par un calcul classique à partir des caractéristiques géométriques du système de détection et de la position relative des émetteurs. Un tel procédé de commande d'un dispositif de détection et les étapes de calcul des décalages de phase sont décrits par exemple dans la publication Robotica (1984), vol. 2, pp. 47-53.

Cependant, on a constaté que les transducteurs monoblocs, tels qu'ils sont utilisés par exemple pour la détection par ultrasons dans les milieux liquides ou solides, ne conviennent pas pour la détection par ultrasons dans l'air, en raison de l'adaptation d'impédance insuffisante qui peut être obtenue.

Ainsi, l'on utilise en général pour les dispositifs de détection par ultrasons dans l'air des réseaux constitués de transducteurs individuels montés sur un support. Mais les tolérances de fabrication et de montage du dispositif de détection ne permettent pas d'obtenir une précision suffisante dans le positionnement géométrique relatif des transducteurs. En effet, les dimensions des éléments constructifs des transducteurs, notamment de leurs cônes d'amplification, ainsi que le cas échéant de leur boîtier, ne sont pas parfaitement identiques, mais varient au contraire d'un transducteur à un autre. Egalement, le montage de la lame vibrante sur la base du boîtier, notamment par l'intermédiaire d'amortisseurs, engendre des différences de positionnement par rapport à la base du boîtier. En outre, le support peut présenter une surface inégale. Enfin, ces éléments subissent des modifications au cours du temps par suite de leur vieillissement. Pour ces différentes raisons, les cônes d'amplification des transducteurs ne sont plus alors placés selon la disposition prévue, par exemple avec leurs cônes d'amplification situés dans un même plan ou une même surface connue, mais sont décalés par rapport à leur disposition théorique.

Ces tolérances de fabrication et ces modifications de positionnement au cours du temps entraînent notamment des déphasages indésirables entre les transducteurs et des irrégularités dans le signal de déphasage. Egalement, le lobe principal du signal de détection perd en directivité, et les lobes secondaires augmentent. La précision des mesures de détection est ainsi diminuée.

Certains des inconvénients ci-dessus ont déjà été reconnus dans la publication pré-citée, mais il n'a pas été possible d'y remédier jusqu'à présent.

Un but de l'invention est de proposer un procédé de commande d'un dispositif de détection qui remédie aux inconvénients ci-dessus, notamment aux imprécisions dans les mesures, et plus précisément, qui compense les décalages constructifs du positionnement géométrique des transducteurs.

Un autre but de l'invention est de proposer un procédé de commande d'un dispositif de détection susceptible d'être mis en oeuvre pour un dispositif dans lequel les transducteurs sont montés sur le support selon des tolérances de fabrication élevées, comme dans les fabrications bon marché.

Encore un autre but de l'invention est de proposer un procédé de calibrage d'un dispositif de détection tel que ci-dessus.

A cet effet, le procédé selon l'invention de commande d'un dispositif de détection d'objets par ultrasons dans l'air comportant, sur un support, une pluralité de transducteurs utilisés en émetteurs prévus pour fonctionner en réseau phasé et au moins un transducteur utilisé en récepteur, procédé dans lequel on réalise des opérations de détection comprenant les étapes suivantes :
- on effectue des tirs en excitant tout ou une partie des émetteurs, de façon à générer des faisceaux de détection successifs, formés de la sommation des faisceaux individuels de chaque émetteur, et en introduisant des décalages de phase successifs entre les émetteurs, de façon à orienter et focaliser chaque fois le faisceau en fonction de ces décalages de phase ;
- on détecte chaque fois le cas échéant un signal d'écho reçu par le ou les récepteurs lorsque le faisceau de détection est réfléchi par un objet ;
- on traite l'ensemble des signaux reçus de façon à positionner et/ou caractériser l'objet ;
est caractérisé par le fait que l'on réalise, préalablement à au moins une opération de détection, une opération de calibrage comprenant les étapes suivantes :
- on choisit un émetteur de référence et un récepteur de référence ;
- pour chacun des autres émetteurs successivement, on procède à une succession de tirs de calibrage sur une cible, en excitant conjointement cet autre émetteur et l'émetteur de référence et en balayant la gamme de décalage de phase d'émission de 0 à 360°, et on mesure l'amplitude du signal reçu par le récepteur de référence ;
- on détermine un décalage de phase constructif de l'émetteur par rapport à l'émetteur de référence, comme celui correspondant au maximum de l'amplitude du signal reçu ;
- on mémorise le décalage de phase constructif de chacun des émetteurs;
et par le fait que l'on corrige ultérieurement les décalages de phase théoriques des émetteurs de la valeur de leur décalage de phase constructif lors des commandes de tirs ultérieurs.

L'émetteur de référence est avantageusement situé en position centrale par rapport à l'ensemble des émetteurs, de façon à favoriser la symétrie du signal de détection.

Selon une première forme de réalisation, le récepteur de référence est un récepteur extérieur au dispositif constituant la cible et situé face au dispositif.

Selon une autre forme de réalisation, le récepteur de référence est le ou un des transducteurs récepteurs du dispositif, la cible étant une surface lisse géométrique située face au dispositif.

La géométrie du dispositif est alors de préférence telle que les récepteurs sont disposés à la périphérie du réseau phasé, et le ou les émetteurs au centre, ou bien l'inverse.

Selon un mode de calibrage dit en approximation de champ lointain, la cible peut être disposée à une distance proche de la portée du dispositif (mode de calibrage en approximation de champ lointain).

Selon un mode de calibrage dit en demi-portée, le récepteur de référence extérieur au dispositif peut être disposé à une distance correspondant à la demi-portée du dispositif, ou la surface lisse géométrique peut être disposée à une distance correspondant à un quart de la portée du dispositif, de façon à minimiser l'erreur due à la focalisation.

On peut également corriger le décalage de phase constructif de chacun des émetteurs en tenant compte de la distance de l'émetteur par rapport à l'émetteur de référence et de la distance de la cible.

On peut faire varier le décalage de phase en continu ou par incréments. Dans l'un et l'autre cas, on peut déterminer le décalage de phase constructif de chacun des émetteurs soit comme le décalage de phase correspondant à la valeur d'amplitude maximale reçue par le récepteur de référence, soit à la valeur du maximum d'une courbe lissant les valeurs d'amplitudes reçues par le récepteur de référence, soit à la valeur du minimum de la courbe en ajoutant le décalage d'opposition de phase de 180°.

On peut également, selon l'invention, réaliser en outre un calibrage de puissance, comprenant les étapes supplémentaires suivantes :
- on choisit un émetteur de référence et une amplitude de référence ;
- pour chacun des émetteurs successivement, on procède à une succession de tirs sur une cible en faisant varier l'intensité d'excitation, et on mesure l'amplitude reçue ;
- on détermine une intensité d'excitation dite de référence de chacun des émetteurs comme l'intensité d'excitation constructive pour laquelle l'amplitude reçue est l'amplitude de référence ;
- on calcule un facteur de correction d'intensité d'excitation de chacun des émetteurs, comme le rapport des intensités d'excitation de référence de l'émetteur de référence et de cet émetteur ;
- on mémorise le facteur de correction de chacun des émetteurs ;
et par le fait que l'on corrige ensuite l'intensité d'excitation des émetteurs par leur facteur de correction lors des commandes de tirs ultérieurs, de façon que l'ensemble des émetteurs émettent à la puissance désirée.

On choisit de préférence pour le calibrage en puissance l'intensité de référence à une valeur inférieure à l'intensité constructive maximale de l'émetteur ayant le facteur d'impédance le plus faible.

L'invention concerne également un procédé de calibrage pour un dispositif de détection d'objets comportant une pluralité de transducteurs émetteurs prévus pour fonctionner en réseau phasé et au moins un transducteur récepteur montés sur un support, qui est caractérisé par le fait que l'on réalise, préalablement à au moins une opération de détection, une opération de calibrage selon les caractéristiques décrites ci-dessus.

On comprendra mieux l'invention à partir de la description suivante d'un exemple de mise en oeuvre du procédé selon l'invention, effectuée en référence aux dessins dans lesquels :
- la figure 1 est une vue schématique partielle d'un dispositif de détection montrant un ensemble de transducteurs émetteurs et/ou récepteurs montés sur un support ;
- la figure 2 est un schéma par blocs d'un dispositif permettant la mise en oeuvre du procédé de commande et/ou de calibrage selon l'invention ;
- la figure 3 est une vue schématique d'une première disposition permettant la mise en oeuvre du procédé selon l'invention ;
- la figure 4 est une vue schématique d'une seconde disposition permettant la mise en oeuvre du procédé selon l'invention ;
- la figure 5 est une vue schématique d'une troisième disposition permettant la mise en oeuvre du procédé selon l'invention.

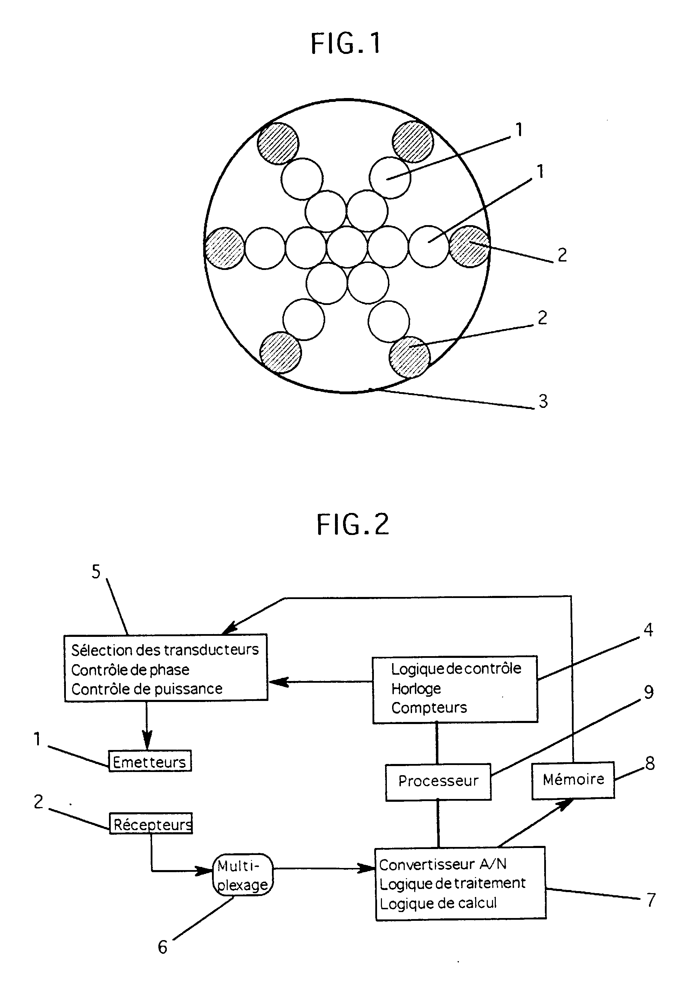

La figure 1 représente un ensemble de transducteurs émetteurs 1 et de transducteurs récepteurs 2 à ultrasons montés sur un support 3, constituant un élément d'un dispositif de détection d'objets par ultrasons.

Le dispositif de détection comprend en outre, comme cela est représenté de manière schématique sur la figure 2, un ensemble de moyens 4 comprenant une logique de contrôle, une horloge et des compteurs, des moyens 5 de sélection et de contrôle de puissance et de phase des émetteurs 1, des moyens 6 de transfert de signaux recueillis par les détecteurs 2, par exemple par multiplexage comme représenté, des moyens 7 de traitement de ces signaux, comprenant un convertisseur analogique/numérique et une logique de calcul, et associés à une mémoire 8. L'ensemble est piloté par un processeur 9. De tels dispositifs sont connus pour la détection et/ou la reconnaissance d'objets.

Afin de diminuer les coûts, les émetteurs 1 sont montés sur le support 3, par exemple par encastrement, avec des tolérances de fabrication non négligeables, qui sont dues notamment aux variations de côtes entre l'élément amplificateur et le boîtier, ainsi qu'au montage de la lame vibrante des transducteurs sur amortisseurs. Les tolérances de fabrication entraînent des décalages de phase entre les différents émetteurs par rapport à la disposition théorique prévue. Ces décalages de phase entraînent à leur tour dans le faisceau de détection formé des faisceaux individuels des émetteurs par rapport au faisceau théorique des interférences (diminution de la directivité, perte de puissance du lobe principal, apparition et augmentation des lobes secondaires) qui nuisent à la qualité et à la résolution de détection.

Le procédé selon l'invention de commande d'un tel dispositif résoud ces problèmes, par le fait que l'on réalise une opération de calibrage préalablement à au moins une opération de détection.

L'opération de calibrage peut être réalisée une seule fois après la fabrication du dispositif et avant sa mise en fonctionnement. Cependant, de préférence, l'étape de calibrage est réalisée plus fréquemment au cours de l'utilisation du dispositif, par exemple à chaque mise en service, ou après un temps de service déterminé.

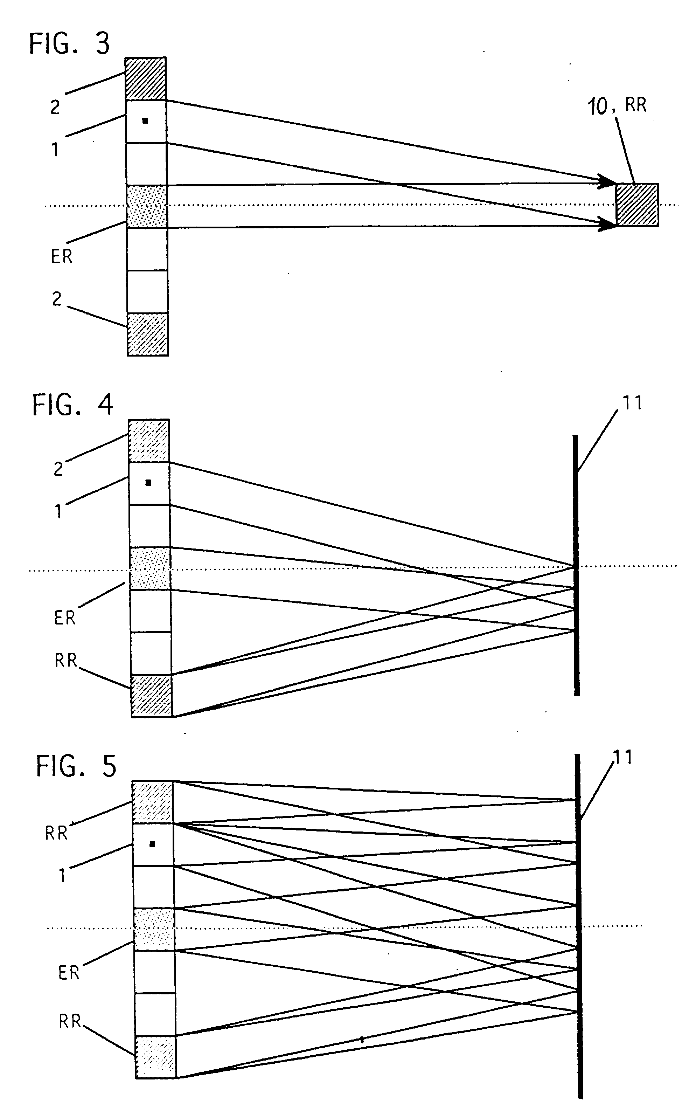

Pour réaliser l'étape de calibrage, on dispose face aux émetteurs 1 du support 3 une cible, qui peut être un récepteur 10 faisant fonction de récepteur de référence RR comme représenté sur la figure 3, ou une surface lisse géométrique 11, le ou un des récepteurs du dispositifs étant alors choisi comme récepteur de référence RR, comme représenté sur la figure 4. Selon une variante du mode de mise en oeuvre de la figure 4, plusieurs récepteurs sont choisis comme récepteurs de référence, par exemple deux comme représenté sur la figure 5.

On choisit parmi les émetteurs 1 un émetteur de référence ER. De préférence, on choisit un des émetteurs 1 disposé en position centrale, afin de minimiser la distorsion due à l'écartement des autres émetteurs par rapport à cet émetteur de référence ER lors de l'étape de calibrage.

Dans la disposition selon la figure 3, le récepteur de référence RR est quasi-ponctuel, ce qui introduit une erreur due au fait que l'on considère généralement en approximation de champ lointain que le faisceau de détection émis vers le récepteur est parallèle, alors qu'il est focalisé en raison de l'écartement des émetteurs individuels sur le support. Cependant, cette erreur est minime, surtout lorsque le récepteur de référence est disposé à une distance du support 3 voisine de la portée du dispositif de détection.

En variante, afin de minimiser cette erreur, le récepteur de référence RR peut être disposé à une distance correspondant à une demi-portée du dispositif de détection.

La portée du dispositif est déterminée en fonction de la puissance des émetteurs, de la qualité du milieu ambiant et de la configuration des objets à déterminer et/ou reconnaître.

La disposition selon la figure 4 permet d'éviter la mise en oeuvre du récepteur supplémentaire 10. La surface lisse géométrique 11 est une surface plane ou un autre type de surface, par exemple un coin.

Dans cette disposition également, il peut exister une erreur due à l'approximation de champ lointain, mais dont l'importance est négligeable. Cependant, afin de minimiser cette erreur, on peut disposer la surface lisse géométrique à une distance correspondant à un quart de la portée du dispositif de détection.

Dans la figure 5, la mise en oeuvre de deux récepteurs de référence RR permet de compenser une manque de symétrie de la disposition, par exemple, lorsque la cible n'est pas disposée parfaitement face au dispositif de détection.

Dans les dispositions des figures 3 à 5, on pourrait également compenser l'erreur due à l'approximation de champ lointain en introduisant pour chacun des émetteurs un facteur de correction prédéterminé en fonction de son écartement par rapport à l'émetteur de référence ER et de la distance du récepteur de référence 10 ou de la surface lisse géométrique 11.

Pour chacun des émetteurs 1 autres que l'émetteur de référence ER successivement, on procède à une succession de tirs de calibrage sur la cible 10 ou 11 en excitant conjointement cet émetteur 1 et l'émetteur de référence ER, et en balayant la gamme de décalage de phase d'émission de 0 à 360°. Pour chacun de ces tirs, on mesure l'amplitude du signal reçu par le récepteur de référence RR. On détermine ainsi un décalage de phase constructif de chacun des émetteurs 1 par rapport à l'émetteur de référence ER, comme celui correspondant au maximum de l'amplitude du signal d'écho.

Le balayage peut être en continu ou par incréments. Dans l'un et l'autre cas, le maximum d'amplitude peut être déterminé comme la valeur maximale mesurée ou comme le maximum d'une courbe lissant les valeurs mesurées. On peut également déterminer le décalage de phase à partir du minimum d'amplitude, en introduisant un décalage de 180°.

On mémorise ensuite le décalage de phase constructif de chaque émetteur, de façon à corriger ultérieurement les décalages de phase théoriques des émetteurs de la valeur du décalage de phase constructif lors des commandes de tirs ultérieurs.

Lorsque la cible 10 n'est pas placée exactement dans l'axe médian du dispositif, ou lorsque la cible 11 n'est pas placée exactement perpendiculairement à l'axe médian du dispositif, il existe une erreur de mesure due aux différences de trajet entre les émetteurs et le ou les récepteurs. Dans le cas où l'on mesure des valeurs relatives, une erreur de positionnement de quelques degrés (de préférence, moins de 5 degrés) est acceptable dans la pratique. Le positionnement est alors approximatif, mais les mesures relatives sont précises.

Dans le cas où l'on mesure des valeurs absolues, il est possible de vérifier la précision du positionnement par symétrie, en comparant la différence de marche sur deux trajets différents et symétriques. Par exemple, pour le mode de réalisation de la figure 3, on peut comparer la différence de marche entre chacun de deux émetteurs éloignés de l'axe médian et le récepteur 10. Pour le mode de réalisation des figures 4 ou 5, on peut mesurer la différence de marche entre l'émetteur de référence ER et chacun de deux récepteurs les plus éloignés de l'axe médian.

## Revendications

1. Procédé de commande d'un dispositif de détection d'objets par ultrasons dans l'air comportant une pluralité de transducteurs utilisés en émetteurs (1) prévus pour fonctionner en réseau phasé et au moins un transducteur utilisé en récepteur (2) montés sur un support (3), procédé dans lequel on réalise des opérations de détection comprenant les étapes suivantes :
- on effectue des tirs en excitant tout ou une partie des émetteurs (1), de façon à générer des faisceaux de détection successifs, formés de la sommation des faisceaux individuels de chaque émetteur (1), et en introduisant des décalages de phase successifs entre les émetteurs (1), de façon à orienter et focaliser chaque fois le faisceau en fonction de ces décalages de phase ;
- on détecte chaque fois le cas échéant un signal d'écho reçu par le ou les récepteurs (2) lorsque le faisceau de détection est réfléchi par un objet ;
- on traite l'ensemble des signaux reçus de façon à positionner et/ou caractériser l'objet ;
puis l'on réalise, préalablement à au moins une opération de détection, une opération de calibrage comprenant les étapes suivantes :
- on choisit un émetteur de référence (ER) et au moins un récepteur de référence (RR) ;
- pour chacun des émetteurs (1) autres que l'émetteur de référence (ER) successivement, on procède à une succession de tirs de calibrage et on mesure l'amplitude du signal reçu par le ou les récepteurs de référence (RR) ;
- on détermine un décalage de phase constructif de l'émetteur (1) par rapport à l'émetteur de référence (ER), comme celui correspondant au maximum de l'amplitude du signal détecté ;
- on mémorise le décalage de phase constructif de chacun des émetteurs (1),
caractérisé par le fait que les tirs de calibrage sont effectués sur une cible (10, 11), en excitant conjointement cet autre émetteur (1) et l'émetteur de référence (ER) et en balayant la gamme de décalage de phase d'émission de 0 à 360°, par le fait que l'on corrige ultérieurement les décalages de phase théoriques des émetteurs (1) de la valeur de leur décalage de phase constructif lors des commandes de tirs ultérieurs, et par le fait que le ou les récepteurs (2) sont disposés à la périphérie du réseau phasé, et les émetteurs (1) au centre, ou inversement.

2. Procédé selon la revendication 1, caractérisé par le fait que l'émetteur de référence (ER) est situé en position centrale par rapport à l'ensemble des émetteurs (1).

3. Procédé selon l'une des revendications 1 ou 2, caractérisé par le fait que la cible (10) est un récepteur constituant le récepteur de référence (RR) et situé face aux émetteurs (1).

4. Procédé selon l'une des revendications 1 ou 2, caractérisé par le fait que le ou les récepteurs de référence (RR) sont au moins un des transducteurs récepteurs (2) du dispositif, la cible (11) étant une surface lisse géométrique située face au dispositif.

5. Procédé selon l'une des revendications 3 ou 4, caractérisé par le fait que la cible (10, 11) est disposée à une distance voisine de la portée du dispositif.

6. Procédé selon la revendication 3, caractérisé par le fait que le récepteur (10) constituant le récepteur de référence (RR) est disposé à une distance correspondant à la demi-portée du dispositif.

7. Procédé selon la revendication 4, caractérisé par le fait que la surface lisse géométrique (11) est disposée à une distance correspondant à un quart de la portée du dispositif.

8. Procédé selon l'une des revendications 1 à 7, caractérisé parle fait que l'on corrige le décalage de phase constructif de chacun des émetteurs (1) en tenant compte de la distance de l'émetteur (1) par rapport à l'émetteur de référence (ER) et de la distance de la cible (10, 11).

9. Procédé selon l'une des revendications 1 à 8, caractérisé par le fait que l'on détermine le décalage de phase constructif de chacun des émetteurs comme le décalage de phase correspondant soit à la valeur d'amplitude maximale reçue par le récepteur de référence, soit à la valeur du maximum d'une courbe lissant les valeurs d'amplitudes reçues par le récepteur de référence, soit à la valeur minimum de la courbe en ajoutant 180°.

10. Procédé selon l'une des revendications précédentes, caractérisé par le fait que l'on réalise en outre un calibrage de puissance, comprenant les étapes suivantes :
- on choisit un émetteur de référence (ER') et une amplitude de référence ;
- pour chacun des émetteurs (1) successivement, on procède à une succession de tirs sur une cible en faisant varier l'intensité d'excitation, et on mesure l'amplitude reçue ;
- on détermine une intensité d'excitation dite de référence de chacun des émetteurs (1) comme l'intensité d'excitation constructive pour laquelle l'amplitude reçue est l'amplitude de référence ;
- on calcule un facteur de correction d'intensité d'excitation de chacun des émetteurs (1), comme le rapport des intensités d'excitation de référence de l'émetteur de référence (ER') et de cet émetteur (1) ;
- on mémorise le facteur de correction de chacun des émetteurs (1) ;
et par le fait que l'on corrige ensuite l'intensité d'excitation des émetteurs (1) par leur facteur de correction lors des commandes de tirs ultérieurs, de façon que l'ensemble des émetteurs (1) émettent à la puissance désirée.

11. Procédé selon la revendication 10, caractérisé par le fait que l'on choisit l'intensité de référence à une valeur inférieure à l'intensité constructive maximale de l'émetteur (1) ayant le facteur d'impédance le plus faible.

12. Procédé de calibrage pour un dispositif de détection d'objets comportant une pluralité de transducteurs émetteurs (1) prévus pour fonctionner en réseau phasé et au moins un transducteur récepteur (2) montés sur un support (3), caractérisé par le fait que l'on réalise, préalablement à au moins une opération de détection, une opération de calibrage selon l'une quelconque des revendications précédentes.
